(19) Europäisches Patentamt / European Patent Office / Office européen des brevets

(11) **EP 2 227 052 A1**

(12) **EUROPEAN PATENT APPLICATION**

(43) Date of publication:
**08.09.2010 Bulletin 2010/36**

(51) Int Cl.:
*H04W 28/06* (2009.01)  *H04W 80/02* (2009.01)

(21) Application number: **09290157.8**

(22) Date of filing: **04.03.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicant: **Alcatel Lucent**
**75008 Paris (FR)**

(72) Inventors:
• **Zeller, Dietrich**
 **71067 Sindelfingen (DE)**
• **Gruber, Markus**
 **70825 Korntal-Münchingen (DE)**

(74) Representative: **Richardt, Markus Albert**
**Richardt Patents Trademarks**
**Wilhelmstraße 7**
**65185 Wiesbaden (DE)**

(54) **Resource allocation method and apparatus thereof**

(57)    According to one broad aspect, the invention proposes a method for generating transport blocks organized in a sequence in a network element of a communication system, the method comprising: obtaining packets of variable sizes carrying payload data associated with respective services; distributing the packets into a plurality of transport blocks organized in a sequence; inserting into a transport block, a first sub-header of a first type and a first fixed part of a header of a second type, both sub-header and fixed part of header associated to at least a portion of a first packet allocated in the transport block, if the first packet is not distributed in a transport block preceding the transport block in the sequence. The method further comprises inserting into the transport block a second sub-header of the first type and a second fixed part of the header of the second type; adding an extension part of the header of the second type to the first fixed part. The extension part carries a length indicator of the first packet. The first and second sub-headers, the first and second fixed parts and extension part of the header have respective predefined sizes.

Fig. 3

## Description

The invention relates to a method for generating transport blocks organized in a sequence in a network element, to a network element and to a computer program product.

The connection between a wireless terminal and a network element of a wireless wideband communication network is generally established via an air interface. The air interface can be a wireless wideband system compliant with the IEEE 802.16 or Long Term Evolution (LTE) standard. The wideband wireless systems, apart from the unicast communications, may also provide multicast and broadcast services to the wireless terminals. The broadcasting mode uses the network capabilities to send information to all destinations without congesting the network capacity, using either broadcast channels or different world routing methods. A more controlled approach is reached using the multicast mode, as it transports the packets to a group of destinations simultaneously, delivering the message over each link of the network only once and creating copies only when the link to the destinations split.

In a mobile communication system, the Radio Access includes a physical layer and a Layer 2. The Layer 2 is split into the following sub-layers: A Medium Access Control (MAC), a Radio Link Control (RLC) and a Packet Data Convergence Protocol (PDCP). Different kinds of data transfer services are offered by the Medium Access Control (MAC) sub-layer. The main services and functions of the Medium Access Control (MAC) sublayer include:

- Mapping between logical channels and transport channels;
- Multiplexing/demultiplexing of RLC Protocol Data Unit (PDU)s belonging to one or different radio bearers into/from transport blocks (TB) delivered to/from the physical layer on transport channels;
- Traffic volume measurement reporting;
- Error correction through Hybrid ARQ (HARQ);
- Priority handling between logical channels of one UE;
- Priority handling between UEs by means of dynamic scheduling;
- Transport format selection;
- Padding.

In the Medium Access Control (MAC) sub-layer, a MAC Protocol Data Unit (PDU) consists of a MAC header, zero or more MAC Service Data Units (MAC SDU), zero, or more MAC Control elements, and optionally padding. A MAC PDU header consists of one or more MAC PDU sub-headers; each sub-header corresponding to either a MAC SDU, a MAC Control element or padding. Both the MAC header and the MAC SDUs are of variable sizes.

Further, the MAC Protocol Data Unit (PDU) header consists of one or more MAC PDU sub-headers; each sub-header corresponding to either a MAC SDU, a MAC Control element or padding. A MAC PDU sub-header corresponding to a MAC SDU consists of the six header fields LCID/E/R/R/F/L but for the last sub-header in the MAC PDU which consists solely of the four header fields LCID/E/R/R. A MAC PDU sub-header corresponding to a MAC Control element consists of the six header fields LCID/E/R/R/F/L but for the last sub-header in the MAC PDU and for fixed sized MAC Control elements which consist solely of the four header fields LCID/E/R/R. A MAC PDU sub-header corresponding to padding consists of the four header fields LCID/E/R/R.

The main services and functions of the RLC sublayer of the mobile communication system include:

- Error Correction through Automatic Repeat Request (ARQ) (CRC check provided by the physical layer, in other words no CRC needed at RLC level);
- Segmentation according to the size of the TB: only if an RLC Service Data Unit (SDU) does not fit entirely into the TB then the RLC SDU is segmented into variable sized RLC Protocol Data Unit (PDU)s, which do not include any padding;
- Re-segmentation of PDUs that need to be retransmitted: if a retransmitted PDU does not fit entirely into the new TB used for retransmission then the RLC PDU is re-segmented;
- The number of re-segmentations is not limited;
- Concatenation of SDUs for the same radio bearer;
- In-sequence delivery of upper layer PDUs except at Handover (HO);
- Duplicate Detection;
- Protocol error detection and recovery;
- SDU discard;
- Reset.

In the Radio Link Control sub-layer, the RLC PDUs can be categorized into RLC data PDUs and RLC control PDUs. RLC data PDUs are used by Transparent Mode (TM), Unacknowledged Mode (UM) and Acknowledged Mode (AM) RLC entities to transfer upper layer PDUs (i.e. RLC SDUs), or used by AM RLC entity to perform ARQ procedures.

The Unacknowledged Mode UM Data (UMD) PDU of the Radio Link Control (RLC) sub-layer is used to transfer upper layer PDUs by an UM RLC entity. UMD PDU consists of a Data field and an UMD PDU header. The UMD PDU consists of a Data field and an UMD PDU header. UMD PDU header consists of a fixed part (fields that are present for every UMD PDU) and an extension part (fields that are present for an UMD PDU when necessary). The fixed part of the UMD PDU header itself is byte aligned and consists of an E, a [SI] and a SN. The extension part of the UMD PDU header itself is byte aligned and consists of E(s) and LI(s).

Further, the Acknowledged Mode Data (AMD) PDU of the Radio Link Control (RLC) sub-layer is used to transfer upper layer PDUs by an AM RLC entity. It is used when the AM RLC entity transmits (part of) the RLC SDU for the first time, or when the AM RLC entity retransmits an AMD PDU without having to perform re-segmentation. AM Data (AMD) PDU consists of a Data field and an AMD PDU header. The AMD PDU header consists of a fixed part (fields that are present for every AMD PDU) and an extension part (fields that are present for an AMD PDU when necessary). The fixed part of the AMD PDU header itself is byte aligned and consists of a D/C, a RF, a P, a [SI], an E and a SN. The extension part of the AMD PDU header itself is byte aligned and consists of E(s) and LI(s).

Further, the Acknowledged Mode Data (AMD) PDU segment of the Radio Link Control consists of a Data field and an AMD PDU segment header. The AMD PDU segment header consists of a fixed part (fields that are present for every AMD PDU segment) and an extension part (fields that are present for an AMD PDU segment when necessary). The fixed part of the AMD PDU segment header itself is byte aligned and consists of a D/C, a RF, a P, a [SI], an E, a SN, a LSF and a SO. The extension part of the AMD PDU segment header itself is byte aligned and consists of E(s) and LI(s).

The wireless terminals may receive several versions of the same packets or frames within a multicast and broadcast zone from several base station transmitters. This can be used, for example, for multimedia broadcast and multicast services. The terminals may take advantage of the plurality of packets using the principle of macro diversity and thus improving the reception quality of the signal. In this context, terminals always need to know which resource entities are synchronized and which are not synchronized in order to correctly perform measurements of the reference symbols.

According to one broad aspect, the invention proposes a method for generating transport blocks organized in a sequence in a network element of a communication system, the method comprising: obtaining packets of variable sizes carrying payload data associated with respective services; distributing the packets into a plurality of transport blocks organized in a sequence; inserting into a transport block, a first sub-header of a first type and a first fixed part of a header of a second type, both sub-header and fixed part of header associated to at least a portion of a first packet allocated in the transport block, if the first packet is not distributed in a transport block preceding the transport block in the sequence.

The method further comprises inserting into the transport block a second sub-header of the first type and a second fixed part of the header of the second type; adding an extension part of the header of the second type to the first fixed part. The extension part carries a length indicator of the first packet. The first and second sub-headers, the first and second fixed parts and extension part of the header have respective predefined sizes.

The term "network element" as used herein refers to any type of base station, Node-B, or radio network controller.

One of the advantages of the embodiments is that it proposes a resource allocation of headers and sub-headers according to the received packets and the transport blocks that allocates the packets independently of how the network element segments and concatenates the packets into the transport block. In that way, in the case of packet losses, the network element only requires certain synchronization information, and with the predefined sizes of the header and sub-headers, is able to calculate a resynchronization point.

In an embodiment, each packet carries data associated with a plurality of multimedia services, wherein transmission of the transport blocks by the network element is synchronized with a plurality of network elements of the communication system, wherein the allocation of at least one of the packets into transport blocks follows a statistical multiplexing allocation.

In an embodiment, the communication system is a mobile communication system which includes a core network and a radio access network, and wherein the network element receives from the core network the packets with synchronization information containing packet counter and byte counter of the packets. In an embodiment, the synchronization information is received by means of a synchronization protocol.

In an embodiment, said synchronization information is calculated after the network element detects packet losses, and comprises a specific transport block and a byte position of the specific transport block. Such synchronization information may advantageously comprise a resynchronization point, which is calculated after the network element detects packet losses, and comprise a specific transport block and a byte position of the specific transport block.

In an embodiment, some of the received packets are segmented or concatenated before allocation into the transport blocks. In a further embodiment, an RLC layer of the mobile communication allocates sequence numbers in a non-consecutive way.

In a further embodiment, the specific transport block and the byte position of the specific transport block are calculated using: a first transport block number of the lost packets, a number of lost bytes, a number of required additional transport blocks, a number of lost packets, and the sizes of the sub-headers of a first type and header of a second type, wherein the number of lost bytes is calculated using the byte counter, wherein the number of lost packets is calculated using the packet counters.

In a further embodiment, the network element stops transmitting transport blocks if the network element detects packet losses.

In an embodiment, the communication system is a radio-communication system, and wherein the sub-headers of a first type are Medium Access Control (MAC) sub-headers, and wherein the header of a second type is a Radio Link Control (RLC) header. In a further embodiment, an RLC layer of the mobile communication system allocates sequence numbers in a non-consecutive way.

In an embodiment, the sub-header of the first type is a dummy sub-header, if the first service packet is not distributed in a transport block preceding the transport block in the sequence and if the first service packet is at a first position of the transport block. The header of a second type is a dummy header for each first service packet added in the transport block, if the first service packet is not distributed in a transport block preceding the transport block in the sequence and if the first service packet is at a first position of the transport block.

According to another broad aspect, the invention proposes a network element for a mobile communication system, being operable to perform in accordance with any one of the preceding claims. The network element may be a base station, or a Node-B, or an eNB, or a radio network controller. The network element comprises interface means for obtaining packets, processing means for distributing the packets, processing means for inserting into a transport block a first sub-header of a first type and a first fixed part of a header of a second type, processing means for inserting into said transport block a second sub-header of said first type and a second fixed part of said header of said second type, processing means for adding an extension part of said header of said second type to said first fixed part, wherein said extension part carries a length indicator of said first packet and wherein said first and second sub-headers, said first and second fixed parts and extension part of said header have respective predefined sizes.

The interface means and the processing means of the network element can be implemented by one or more processors that serve to execute program codes for providing the respective functionalities.

According to another broad aspect, the invention proposes a mobile communication system comprising: means for obtaining packets of variable sizes carrying payload data associated with respective services; means for distributing the packets into a plurality of transport blocks organized in a sequence; means for inserting into a transport block, a first sub-header of a first type and a first fixed part of a header of a second type, both sub-header and fixed part of header associated to at least a portion of a first packet allocated in the transport block, if the first packet is not distributed in a transport block preceding the transport block in the sequence.

The mobile communication system further comprises: means for inserting into the transport block a second sub-header of the first type and a second fixed part of the header of the second type; means for adding an extension part of the header of the second type to the first fixed part. The extension part carries a length indicator of the first packet. The first and second sub-headers, the first and second fixed parts and extension part of the header have respective predefined sizes.

According to another broad aspect, the invention proposes a computer program product stored on a storage medium, comprising executable program means for causing a network element to perform a method according to any of the preceding embodiments when the program is run on the network element.

In the following preferred embodiments of the invention will be described in greater detail by way of example only making reference to the drawings in which:

Figure 1     shows an example of a statistical multiplexing into transport blocks,

Figure 2     shows an example of service packets allocation into the transport blocks,

Figure 3     shows an example of resource allocation into transport blocks,

Figure 4     shows an example of a mobile communication system.

Figure 5     shows a method according to the embodiments

A mobile communication system as a Multimedia Broadcast over Single Frequency Networks (MBSFN) requires a data synchronization of all the network elements involved in the transmission of the multiple services to the mobile stations. When a network element, that may be for example a base station or an eNB, receives service packets from a core network, the allocation into transport blocks may follow a pattern, where a given transport block only carries packets belonging to a single service. On the other hand, if statistical multiplexing, which is an efficient use of resources by an overbooking strategy, is applied, packets belonging to different services may be allocated within the same transport block, i.e. there can be data belonging to several services in the very same transport block. However, for statistical multiplexing the quantity of header data in the case of packet losses cannot be known because the use of these headers depends on how packets are segmented into the transport blocks.

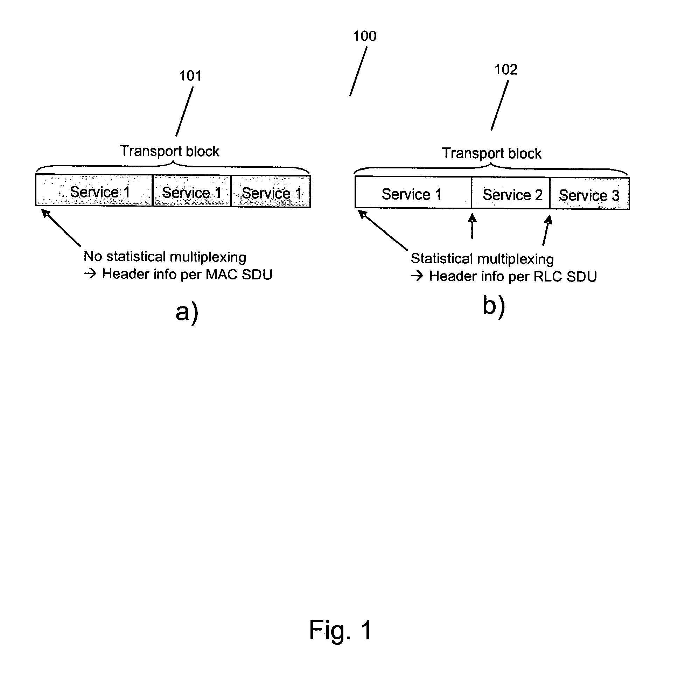

Fig. 1 a shows an example of a transport block with no statistical multiplexing. Without MAC level multiplexing, the MAC header overhead is independent from the way the incoming packets are segmented or concatenated to fit into the transport block. In this case, the header information of the transport block is a constant for the entire transport block. In case of no statistical multiplexing, the MAC overhead for the transmission of a service is only a function of the number of transport blocks needed to transmit the service data. The RLC header overhead depends on the number of the different segments concatenated to form a transport block and also on the type of segment.

Fig. 1b shows an example of transport block allocation using statistical multiplexing, where three different packets contain data belonging to three different services, a different service per packet. In this case, the MAC multiplexing is applied and the MAC header overhead is a function of the number of services multiplexed into one transport block. If there are several services in one transport block, there is an additional MAC sub-header for each additional service and there has to be an RLC header in front of each segment. The segment is the result of the RLC segmentation, where for example an incoming packet that does not fit into a transport block is distributed over several transport blocks in a contiguous way. The statistical multiplexing does not follow a predictable pattern allocation, and in the case of packet losses, the resynchronization calculation may be complex.

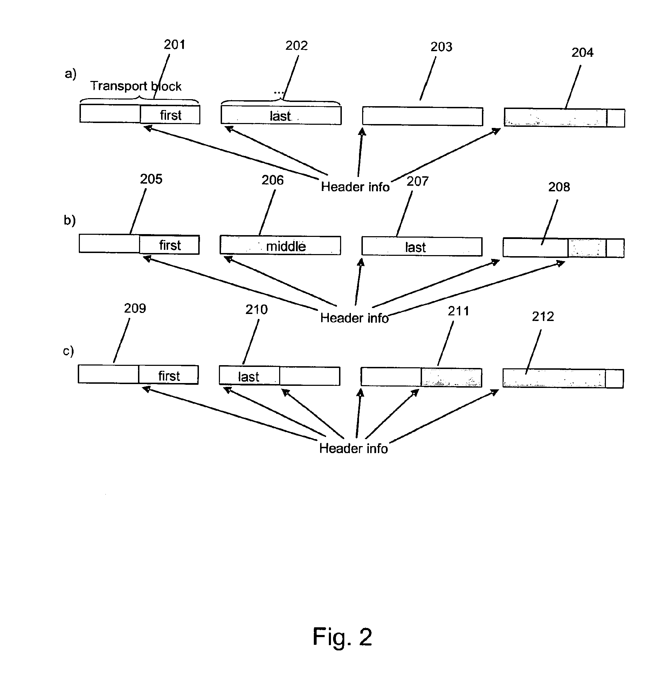

Fig. 2 shows three different alternatives of allocating packets belonging to three different services, wherein a first service is depicted in green, a second service is depicted in blue and the third service is depicted in pink. These three services are allocated and distributed into four different transport blocks. In the first case 2a), the first service packet is segmented and allocated into the first 201 and the second transport block 202, wherein a first segment is allocated into a portion of the first transport block 201 and the second transport block 202 is completely filled by the rest of the remaining data of this first packet. The second service packet is completely allocated into the third transport block 203 and the third service packet is allocated into a portion of the fourth transport block 204.

Fig. 2b shows an alternative of the packet allocation into the transport blocks 205 to 208. In the second case, the packet belonging to the first service is segmented and allocated into the first three transport blocks 205-207, wherein the first part of the packet allocated into the first transport block 205 uses a portion of the transport block and the remaining packets are entirely allocated into the transport blocks 206 and 207. The second and the third service are both allocated into the fourth transport block 208 and a remaining portion of the transport block 208 is available.

In a third possible allocation of the service packets represented in 2c), a first packet belonging to the first service is segmented and allocated into the first transport block 209 and the second segment of the first service is allocated into a first portion of the second transport block 210. Consequently, the second service is allocated into the second and the third transport block 210 and 211, wherein the first segment of the second service is allocated into the remaining portion of the transport block and its second segment is allocated into the first portion of the third transport block 211. The third service is then allocated into the third transport block 211 and the remaining segment is allocated into the fourth transport block 212.

If the network element of the mobile communication system requires to resynchronize the packet allocation into the transport blocks with another network element, and the network element only receives the synchronization information containing a packet counter and byte counter, the network element is aware of the number of lost packets but it can only derive the overall data volume of all consecutive lost packets, but not the data volume of each single packet individually. As a consequence, the network element, that may be a base station or an eNB, does not have information regarding how the lost packets were distributed over the transport blocks, and therefore it cannot know how much header information was allocated and used into the different transport blocks. This network element then is not able to resynchronize its packet allocation.

As shown in the different arrows of fig. 2, depending on how the packets were segmented, concatenated and allocated into the different transport blocks, it will have an influence on the quantity of header data allocated into the different transport blocks. In the first case 2a), there are three header pieces due to a new packet, depicted with the black arrows, and one header piece due to a new segment of the same packet, depicted with the red arrows. In the second case 2b), there are two headers belonging to a new segment of the same packet and the three pieces due to the three packets. In the third case 2c, there are three different headers belonging to the different new segments of the same packets allocated into the different transport blocks, and the three header pieces of the three packets.

The number of header information pieces may vary between P and P + T, where P is the number of lost packets and T is the number of transport blocks that need to be spent on these lost packets. P is the lower limit of header information pieces considering that this information is needed for each packet individually, that in the Fig. 2 correspond to the black arrows. The upper limit P + T contains the additional header information that may be needed for each new transport block that contains packets with the same service, shown in the fig. 2 with the black plus the red arrows. As the network element does not have any knowledge of how the lost packets were distributed in the other network elements, there is no way to calculate how much header overhead was inserted by the other network elements that receive all the packets correctly. As a consequence, the network element can not be synchronized with the other network elements.

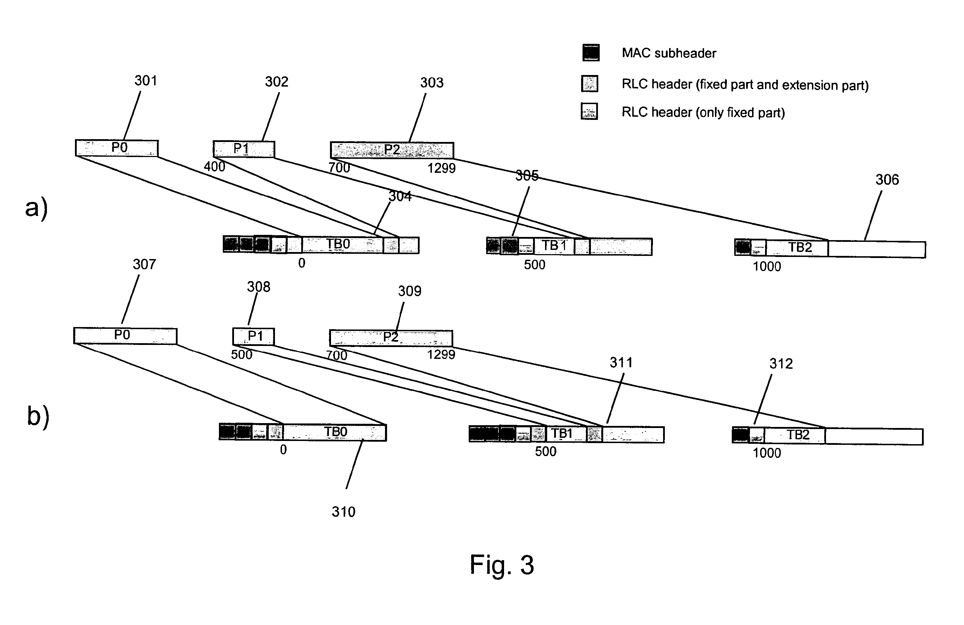

Fig. 3 shows an example of the resource allocation method that allows a resynchronization process of a network element that requires to resynchronize with other network elements, according to the proposed embodiments. In fig. 3, three different services 301-303 are allocated into three different transport blocks 304-306, and another three different services 307-309 are allocated into another three different transport blocks 310-312.

In the proposed method of the embodiments, the size of both the MAC sub-header and the fixed part of an RLC header are reserved for each transport block and for each packet. Additionally, the size of an extension part of an RLC header is reserved for each packet. The transport block number for resynchronization in case of losses can then be calculated by taking into account the number of packets, using the packet counter, the number of bytes, using the byte counter, and both the fixed part of the RLC header and the MAC sub-header for each new packet and each new transport block, plus the RLC extension part for each new packet. In a similar manner, the byte position in the transport block is also determined. These new positions are used for the resynchronization procedure.

In Fig. 3, the first transport block 304 gets allocated two different pieces of packets belonging to two different services 301 and 302. According to the proposed method of the embodiments, the MAC sub-header and the fixed part of an RLC header are inserted for each start of a packet into the transport block 304. Also a second MAC sub-header and a second fixed part of the RLC header is inserted for each transport block. Finally, an extension part of the RLC header is added for each start of a packet. This extension part of the RLC header carries a length indicator of the packet. All the MAC sub-headers, the fixed part of the RLC headers and the extension parts of the RLC headers have predefined sizes.

As the transport block 304 contains two starts of packets, there are three MAC sub-headers, corresponding to the transport block and the two starts of packets. There are also three fixed parts of the RLC headers, also corresponding to the transport block and for both starts of packets. Finally, there are two extension parts of the RLC header corresponding to both starts of packets 301 and 302.

As it can be shown in the fig. 3, the packet 302 is segmented into two portions that are distributed into the first transport block 304 and the second transport block 305. As a consequence, the RLC header and the MAC sub-header for the start of the second packet 302 are already inserted into the first transport block and therefore they are not inserted again into the second transport block 305. The second transport block 305 gets inserted two MAC sub-headers corresponding to the transport block and to the third packet 303, and also a first fixed part of the RLC header for the start of the third packet 303 and a second fixed part of the RLC header for the transport block. Finally, an extension part of the RLC header is also added into the second transport block 305 that corresponds to the start of packet 303.

As the third packet 303 is also segmented and allocated into two different transport blocks, the third transport block 306 has allocated a MAC sub-header corresponding to the transport block and a fixed part of the RLC header, also corresponding to the transport block.

In a further example of the allocation alternatives, and following the rules set in the embodiments, the fourth transport block 310 contains a single packet 307, and therefore it gets allocated two MAC sub-headers, two fixed parts of the RLC headers, and a single extension part of the RLC header. This fourth packet 307 has not been segmented and is completely allocated into a single transport block.

The fifth transport block 311 contains an allocation distribution that is similar to the first transport block 304, as a fifth packet 308 is distributed into the transport block 311 and a portion of the sixth packet 309 is also distributed into the transport block 311. Therefore, there are three MAC sub-headers inserted into the transport block 311, three fixed parts of the RLC headers, and two extension parts of the RLC headers, these last two extension parts corresponding to the starts of the two packets. Finally, the sixth transport block 312 has the same pattern allocation as the third transport block 306, as a portion of the packet is distributed into the transport block, and therefore this portion of the packet does not require additional header information. Therefore, the transport block 312 contains a MAC sub-header corresponding to the transport block and the fixed part of the RLC header also corresponding to the transport block 312.

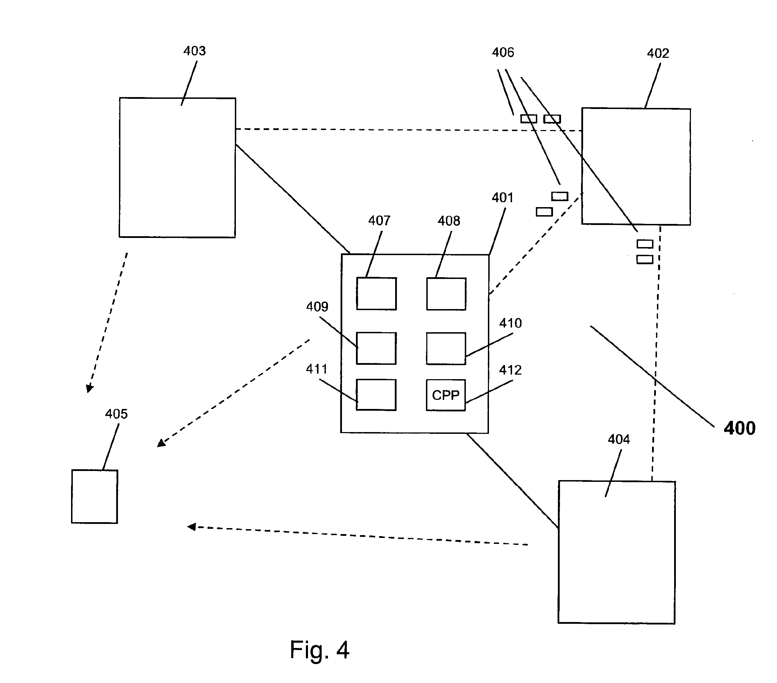

Fig. 4 shows a mobile communication system 400 comprising network element 401 coupled to a core network 402 and synchronized with other network elements 403 and 404. The network elements 401, 403 and 404 form a multimedia broadcast single frequency network and transmit simultaneous data to at least a mobile station 405.

The core network 402 transmits IP service packets to the network elements 401, 403 and 404. The packets 406 carry payload data associated with respective services. The network element 401 receives the packets 406 with the means for obtaining packets 407. The network element 401 further comprises means for distributing the packets 408 into a plurality of transport blocks organized in a sequence; means for inserting 409 into a transport block a first sub-header of a first type and a first fixed part of a header of a second type, both sub-header and fixed part of header associated to at least a portion of a first packet allocated in the transport block, if the first packet is not distributed in a transport block preceding the transport block in the sequence.

The network element 401 further comprises: means for inserting 410 into the transport block a second sub-header of the first type and a second fixed part of the header of the second type; and means for adding 411 an extension part of the header of the second type to the first fixed part. The extension part carries a length indicator of the first packet. The first and second sub-headers, the first and second fixed parts and extension part of the header have respective predefined sizes.

Each packet carries data associated with a plurality of multimedia services. The transmission of the transport blocks by the network element is synchronized with a plurality of network elements of the communication system. The allocation of at least one of the packets into transport blocks follows a statistical multiplexing allocation. The communication system is a mobile communication system which includes a core network and a radio access network, and wherein the network element (401) receives from the core network the packets with synchronization information containing packet counter and byte counter of the packets. Further, the synchronization information is received by means of a synchronization protocol.

Some of the received packets are segmented or concatenated before the allocation into the transport blocks. That means that a single packet may be split and allocated into two different transport blocks.

In case of the packet losses or packets not received by the network element 401, the network element 401 may further receive synchronization information from the core network 402 containing packet counters and byte counters of the packets. The network element stops transmitting the transport blocks until a resynchronization is reached. In order to resynchronize with the other network elements, a resynchronization point is calculated. A resynchronization point indicates a specific transport block and a byte position of the specific transport block, and is used to restart the allocation of the received packets after the packet losses.

The specific transport block and the byte position of the specific transport block are calculated using: a first transport block number of the lost packets, a number of lost bytes, a number of required additional transport blocks, a number of lost packets, and the sizes of the sub-headers of a first type and header of a second type. The number of lost bytes is calculated using the byte counter, and the number of lost packets is calculated using the packet counters.

The expression "network element" as used herein refers to any type of base station, Node-B, eNode-B, or radio network controller. Further, the network element 401 may further comprise a computer program product stored on a storage medium, comprising executable program means.

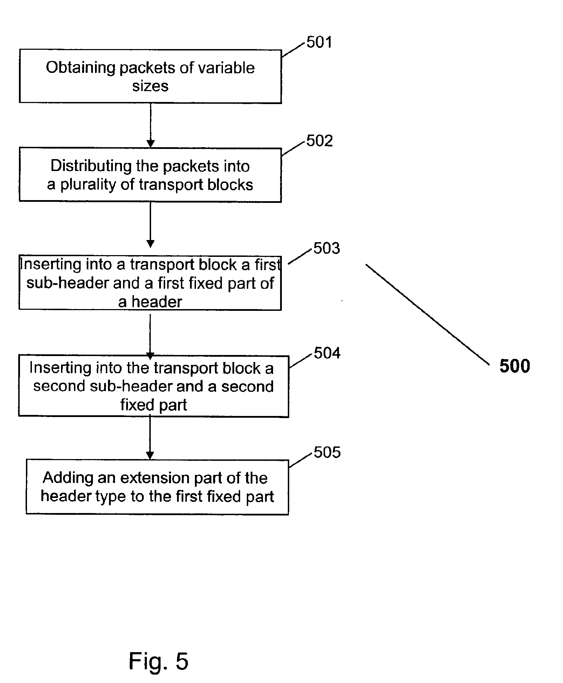

Fig. 5 shows a method 500 for generating transport blocks organized in a sequence in a network element of a communication system. In a first step 501 packets are obtained from a core network, where the packets carry payload data associated with multiple services. The method further comprises distributing the packets into a plurality of transport blocks organized in a sequence in a second step 502. A third step 503 consists of inserting into a transport block a first sub-header of a first type and a first fixed part of a header of a second type, both sub-header and fixed part of header associated to at least a portion of a first packet allocated in the transport block, if the first packet is not distributed in a transport block preceding the transport block in the sequence.

The method 500 further comprises in a forth step 504 inserting into the transport block a second sub-header of the first type and a second fixed part of the header of the second type; and a fifth step 505 comprises adding an extension part of the header of the second type to the first fixed part. The extension part carries a length indicator of the first packet. The first and second sub-headers, the first and second fixed parts and extension part of the header have respective predefined sizes.

In case of lost packets the network element (or eNB) has to determine the transport block number ($TB_{after\_loss}$) and the byte position ($BP_{after\_loss}$) within the transport block specified by $TB_{after\_loss}$ for the next correctly received packet after the loss, depending on both byte counter and packet counter. The calculation for determining the transport block number ($Tb_{after\_loss}$) may correspond to:

$$TB_{after\_loss} = TB_{loss} + \left\lfloor \frac{BP_{loss} + \Delta_{bytes}}{S_{TB}} \right\rfloor$$

with

$\Delta_{bytes} = \Delta BC + (\Delta TB + \Delta PC) \cdot (S_{MAC\_sub} + S_{RLC\_fixed}) + \Delta PC \cdot S_{RLC\_extension}$ and with $TB_{loss}$ being the first transport block number of the lost packets, $BP_{loss}$ being the first byte position within the transport block specified by $TB_{loss}$ that could not be filled due to the lost packets, $\Delta BC$ being the number of lost bytes determined by using the byte counter of the SYNC protocol, $\Delta TB$ being the number of additional transport blocks due to the lost packets, and $\Delta PC$ being the number of lost packets determined using the packet counter of the SYNC protocol. $S_{MAC\_sub}$, $S_{RLC\text{-}fixed}$, $S_{RLC\_extension}$, and $S_{TB}$ are the sizes of a MAC sub-header, the fixed part of an RLC header, the extension part of an RLC header, and the transport block, respectively.

Further, the calculation for determining the byte position ($BP_{after\_loss}$) within the transport block specified by $TB_{after\_loss}$ for the next correctly received packet after the loss may correspond to:

$$BP_{after\_loss} = BP_{loss} + \Delta_{bytes} - \left\lfloor \frac{BP_{loss} + \Delta_{bytes}}{S_{TB}} \right\rfloor \cdot S_{TB}$$

The equations take into account header information such as MAC subheaders and RLC headers. Rules are set and the size of both a MAC subheader and the fixed part of an RLC header are reserved for each transport block and also for each packet. Additionally, the size of an extension part of an RLC header is reserved for each packet. If a MAC subheader or an RLC header may be unnecessary from a unicast point of view, they are replaced by dummy headers or dummy header parts. Alternatively, padding may be used to account for the required sizes. In this case, it may be required to take into account that padding also has to be announced by another MAC subheader, so that the size of a MAC subheader is subtracted from the size to be padded.

An RLC header consists of a fixed part and in case of carrying a length indicator also an additional extension part. Furthermore, some protocol principles may be applied, particularly that one length indicator per RLC SDU is sufficient, i.e. only those RLC headers belonging to a first segment carry an extension part. Also, for synchronization purposes, the MAC subheader, the RLC fixed header part, and the RLC extension header part need to have a well defined size.
The transport block number can then be calculated by taking into account the number of bytes spent (using the byte counter) and both the fixed part of an RLC header and a MAC subheader for each new packet and each new transport block, plus an RLC extension part for each new packet. The position in the transport block is determined in an analogous manner.

Further, a pseudo code for the calculation of the final transport block number and the final byte position in that transport block for a given service may look like:

```
Check_transport_block_number = Former_transport_block;
// Former_transport_block is the number of the final transport block of the service
delivered right before the given service

Transport_block_number = 0; // will eventually return the final transport block
number of the given service
Position_in_transport_block = 0; // final byte position in the final transport block of a
given service

// Former_byte_position points to the final byte of the service delivered right before
the given service
// Byte_counter represents the number of bytes that are consumed by the given ser-
vice
// Packet counter represents the number of packets used by the given service

While(Check_transport_block_number < Former_transport_block + [For-
mer_byte_position + Byte_counter + (Check_transport_block_number +
Packet_counter) * (Size_oCMAC_subheader +
Size_of_fixed_part_of RLC_header) + Packet_counter *
Size_of extension_part_of_RLC_header] DIV Size_of_transport_block)
{
    Check_transport_block_number++;
}
Transport_block_number = Check_transport_block_number;
Position_in_transport_block = [Former_byte_position + Byte_counter + (Trans-
port_block_number + Packet_counter) * (Size_of_MAC_subheader +
Size_of_fixed_part_of_RLC_header) + Packet_counter *
Size_of_extension_part_of_RLC_header] MOD Size_of_transport_block.
```

## List of reference numerals

| 100 | Transport blocks |
|-----|------------------|
| 101 | Non-statistical multiplexing |

(continued)

| | |
|------|------------------------------|
| 102 | Statistical multiplexing |
| 201 | First transport block |
| 202 | Second transport block |
| 203 | Third transport block |
| 204 | Fourth transport block |
| 205 | First transport block |
| 206 | Second transport block |
| 207 | Third transport block |
| 208 | Fourth transport block |
| 209 | First transport block |
| 210 | Second transport block |
| 211 | Third transport block |
| 212 | Fourth transport block |
| 301 | First packet |
| 302 | Second packet |
| 303 | Third packet |
| 304 | First transport block |
| 305 | Second transport block |
| 306 | Third transport block |
| 307 | Fourth packet |
| 308 | Fifth packet |
| 309 | Sixth packet |
| 310 | Fourth transport block |
| 311 | Fifth transport block |
| 312 | Sixth transport block |
| 400 | Mobile communication system |
| 401 | First network element |
| 402 | Core network |
| 403 | Second network element |
| 404 | Third network element |
| 405 | Mobile station |
| 406 | Packets |
| 407 | Means for obtaining |
| 408 | Means for distributing |
| 409 | Means for inserting |
| 410 | Means for inserting |
| 411 | Means for adding |
| 412 | Computer program product |
| 500 | Method steps |

(continued)

| 501 | First step |
|-----|------------|
| 502 | Second step |
| 503 | Third step |
| 504 | Fourth step |
| 505 | Fifth step |

**Claims**

1. A method for generating transport blocks organized in a sequence in a network element (401) of a communication system, the method comprising:

   - obtaining (501) packets (301,302,303) of variable sizes carrying payload data associated with respective services;
   - distributing (502) said packets (301,302,303) into a plurality of transport blocks (304, 305, 306) organized in a sequence;
   - inserting (503) into a transport block (304), a first sub-header of a first type and a first fixed part of a header of a second type, both sub-header and fixed part of header associated to at least a portion of a first packet allocated in said transport block, if said first packet is not distributed in a transport block preceding said transport block in said sequence;
   - inserting (504) into said transport block (304) a second sub-header of said first type and a second fixed part of said header of said second type ;
   - adding (505) an extension part of said header of said second type to said first fixed part, wherein said extension part carries a length indicator of said first packet;

   wherein said first and second sub-headers, said first and second fixed parts and extension part of said header have respective predefined sizes.

2. The method of claim 1, wherein each packet carries data associated with a plurality of multimedia services, wherein transmission of said transport blocks by said network element is synchronized with a plurality of network elements of said communication system, wherein said allocation of at least one of said packets (301,302,303) into transport blocks (304, 305, 306) follows a statistical multiplexing allocation (102).

3. The method of claim 1, wherein said communication system is a mobile communication system which includes a core network and a radio access network, and
   wherein the network element (401) receives from the core network the packets with synchronization information containing packet counter and byte counter of said packets.

4. The method of claim 3, wherein said synchronization information is received by means of a synchronization protocol.

5. The method of claim 3, wherein said synchronization information is calculated after said network element detects packet losses, and comprises a specific transport block and a byte position of said specific transport block.

6. The method of claim 5, wherein said specific transport block and said byte position of said specific transport block are calculated using: a first transport block number of the lost packets, a number of lost bytes, a number of required additional transport blocks, a number of lost packets, and said sizes of said sub-headers of a first type and header of a second type, wherein said number of lost bytes is calculated using said byte counter, wherein said number of lost packets is calculated using said packet counters.

7. The method of any of the preceding claims, wherein said network element stops transmitting said transport blocks if said network element detects packet losses.

8. A method according to any of the preceding claims, wherein some of said obtained packets are segmented or concatenated before allocation into said transport blocks.

9. A method according to any of the preceding claims, wherein said communication system is a radio-communication system, and wherein said sub-headers of a first type are Medium Access Control (MAC) sub-headers, and wherein said header of a second type is an Radio Link Control (RLC) header.

10. The method of claim 9, wherein an RLC layer of said mobile communication system allocates sequence numbers in a non-consecutive way.

11. The method of any of the preceding claims, wherein said sub-header of said first type is a dummy sub-header, if said first service packet is not distributed in a transport block preceding said transport block in said sequence and if said first service packet is at a first position of said transport block, wherein said header of a second type is a dummy header for each first service packet added in said transport block, if said first service packet is not distributed in a transport block preceding said transport block in said sequence and if said first service packet is at a first position of said transport block.

12. A network element for a mobile communication system (400), being operable to perform in accordance with any one of the preceding claims comprising:

- interface means for obtaining packets (301,302,303) of variable sizes carrying payload data associated with respective services;
- processing means for distributing (502) said packets (301,302,303) into a plurality of transport blocks (304, 305, 306) organized in a sequence;
- processing means for inserting (503) into a transport block (304), a first sub-header of a first type and a first fixed part of a header of a second type, both sub-header and fixed part of header associated to at least a portion of a first packet allocated in said transport block, if said first packet is not distributed in a transport block preceding said transport block in said sequence;
- processing means for inserting (504) into said transport block (304) a second sub-header of said first type and a second fixed part of said header of said second type ;
- processing means for adding (505) an extension part of said header of said second type to said first fixed part, wherein said extension part carries a length indicator of said first packet;

wherein said first and second sub-headers, said first and second fixed parts and extension part of said header have respective predefined sizes.

13. The network element of claim 12, wherein said network element is a base station, or a Node-B, or an eNB, or a radio network controller.

14. A mobile communication system (400) comprising:

- means for obtaining (407) packets (301,302,303) of variable sizes carrying payload data associated with respective services;
- means for distributing (408) said packets (301,302,303) into a plurality of transport blocks (304, 305, 306) organized in a sequence;
- means for inserting (409) into a transport block (304, 305, 306), a first sub-header of a first type and a first fixed part of a header of a second type, both sub-header and fixed part of header associated to at least a portion of a first packet allocated in said transport block, if said first packet is not distributed in a transport block preceding said transport block in said sequence;
- means for inserting (410) into said transport block (304, 305, 306) a second sub-header of said first type and a second fixed part of said header of said second type ;
- means for adding (411) an extension part of said header of said second type to said first fixed part, wherein said extension part carries a length indicator of said first packet;

wherein said first and second sub-headers, said first and second fixed parts and extension part of said header have respective predefined sizes.

15. A computer program product (412) stored on a storage medium, comprising executable program means for causing a network element to perform a method according to any of the preceding claims 1 to 11 when the program is run on the network element.

EP 2 227 052 A1

100

101

102

Transport block

| Service 1 | Service 1 | Service 1 |
|-----------|-----------|-----------|

No statistical multiplexing
→ Header info per MAC SDU

a)

Transport block

| Service 1 | Service 2 | Service 3 |
|-----------|-----------|-----------|

Statistical multiplexing
→ Header info per RLC SDU

b)

Fig. 1

Fig. 2

EP 2 227 052 A1

Fig. 3

Fig. 4

EP 2 227 052 A1

EP 2 227 052 A1

```
                                            ╭─501
        ┌──────────────────────────┐
        │   Obtaining packets of variable │
        │            sizes              │
        └──────────────────────────┘
                      │
                      ▼                     ╭─502
        ┌──────────────────────────┐
        │   Distributing the packets into  │
        │   a plurality of transport blocks │
        └──────────────────────────┘
                      │
                      ▼                     ╭─503
        ┌──────────────────────────┐
        │ Inserting into a transport block a first │
        │ sub-header and a first fixed part of │
        │            a header           │
        └──────────────────────────┘
                      │
                      ▼                     ╭─504
        ┌──────────────────────────┐
        │ Inserting into the transport block a │
        │  second sub-header and a second  │
        │            fixed part          │
        └──────────────────────────┘
                      │
                      ▼                     ╭─505
        ┌──────────────────────────┐
        │  Adding an extension part of the │
        │  header type to the first fixed part │
        └──────────────────────────┘
```

500

Fig. 5

Europäisches
Patentamt

European
Patent Office

Office européen
des brevets

# EUROPEAN SEARCH REPORT

Application Number

EP 09 29 0157

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/310452 A1 (VEDANTHAM RAMANUJA [US] ET AL) 18 December 2008 (2008-12-18) | 1-5,7-15 | INV.<br>H04W28/06<br>H04W80/02 |
| A | * figures 1-10 *<br>* paragraph [0008] *<br>* paragraph [0029] - paragraph [0062] *<br>----- | 6 | |
| A | EP 1 650 922 A1 (NIPPON TELEGRAPH & TELEPHONE [JP]) 26 April 2006 (2006-04-26)<br>* the whole document *<br>----- | 1-15 | |
| A | US 2005/208945 A1 (HONG SEUNG-EUN [KR] ET AL) 22 September 2005 (2005-09-22)<br>* the whole document *<br>----- | 1-15 | |
| A | WO 2007/053950 A1 (NORTEL NETWORKS LTD [CA]; ZHANG HANG [CA]; FONG MO-HAN [CA]; ZHU PEIYI) 18 May 2007 (2007-05-18)<br>* the whole document *<br>----- | 1-15 | |
| A | WO 2007/090834 A2 (ERICSSON TELEFON AB L M [SE]; ISOSAARI MIKA [FI])<br>16 August 2007 (2007-08-16)<br>* the whole document *<br>----- | 1-15 | TECHNICAL FIELDS SEARCHED (IPC)<br><br>H04W |
| A | EP 1 689 134 A2 (SAMSUNG ELECTRONICS CO LTD [KR]) 9 August 2006 (2006-08-09)<br>* the whole document *<br>----- | 1-15 | |

The present search report has been drawn up for all claims

| Place of search | Date of completion of the search | Examiner |
|---|---|---|
| The Hague | 6 August 2009 | Frantzeskakis, D |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 09 29 0157

This annex lists the patent family members relating to the patent documents cited in the above-mentioned European search report.
The members are as contained in the European Patent Office EDP file on
The European Patent Office is in no way liable for these particulars which are merely given for the purpose of information.

06-08-2009

| Patent document cited in search report | Publication date | Patent family member(s) | Publication date |
|---|---|---|---|
| US 2008310452 A1 | 18-12-2008 | NONE | |
| EP 1650922 A1 | 26-04-2006 | CA 2518696 A1<br>WO 2005013576 A1<br>JP 3914558 B2<br>KR 20060020611 A<br>US 2006251028 A1 | 10-02-2005<br>10-02-2005<br>16-05-2007<br>06-03-2006<br>09-11-2006 |
| US 2005208945 A1 | 22-09-2005 | KR 20050088817 A | 07-09-2005 |
| WO 2007053950 A1 | 18-05-2007 | US 2008285501 A1 | 20-11-2008 |
| WO 2007090834 A2 | 16-08-2007 | CN 101379797 A<br>EP 1994716 A2 | 04-03-2009<br>26-11-2008 |
| EP 1689134 A2 | 09-08-2006 | EP 1811727 A2<br>WO 2006083149 A1<br>KR 20060090191 A<br>KR 20070077798 A<br>US 2006251105 A1 | 25-07-2007<br>10-08-2006<br>10-08-2006<br>27-07-2007<br>09-11-2006 |

EPO FORM P0459